## Europäisches Patentamt
## European Patent Office
## Office européen des brevets

(11) Veröffentlichungsnummer : **0 199 346**
B1

(12)

# EUROPÄISCHE PATENTSCHRIFT

(45) Veröffentlichungstag der Patentschrift :
13.12.89

(51) Int. Cl.⁴ : **C 09 D 5/08, C 23 F 11/12**

(21) Anmeldenummer : 86105605.9

(22) Anmeldetag : 23.04.86

(54) **Rostumwandelnde und vor dem Weiterrosten schützende filmbildende Zusammensetzung und deren Verwendung.**

(30) Priorität : 25.04.85 CH 1772/85

(43) Veröffentlichungstag der Anmeldung :
29.10.86 Patentblatt 86/44

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
DE--B-- 2 425 213
GB--A-- 2 025 388
US--A-- 4 086 182

(73) Patentinhaber : **Enviro-Chemie AG**
**Twirren**
**CH-8733 Eschenbach (CH)**

(72) Erfinder : **Lieberherr, Bruno**
**Twirren**
**CH-8733 Eschenbach (CH)**

(74) Vertreter : **Blum, Rudolf Emil Ernst et al**
**c/o E. Blum & Co Patentanwälte Vorderberg 11**
**CH-8044 Zürich (CH)**

## Beschreibung

Die vorliegende Erfindung betrifft eine rostumwandelnde und vor dem Weiterrosten schützende filmbildende Zusammensetzung, die einen pH-Wert von 3-5 aufweist und als Rostumwandler eine aromatische Carbonsäure mit mindestens einer phenolischen Hydroxylgruppe enthält. Dieser Rostumwandler reagiert mit Rostfilmen oder Rostpartikeln, die auf einem Eisen enthaltenden Substrat anwesend sind, unter Bildung eines rostschützenden Einsenkomplexes. Die Zusammensetzungen sind Lösungen, welche die Komponenten, gelöst in einem Lösungsmittel auf Basis von Wasser und wassermischbarem organischen enthalten.

Des weiteren betrifft die vorliegende Erfindung ein Verfahren zur Schützung von entsprechenden Eisen enthaltenden oder eine Eisenlegierung enthaltenden Substraten durch Aufbringung der erfindungsgemässen Zusammensetzungen. Bei der Aufbringung dieser Zusammensetzungen werden auf dem Substrat gegebenenfalls anwesende Rostteilden oder Rostfilme in einen entsprechenden schwarz gefärbten oder blau gefärbten Eisenkomplex umgewandelt und es bildet sich nach dem Trocknen eine gut haftende zusammenhängende Schutzschicht aus.

Es ist bekannt, dass synthetisch hergestellte oder in der Natur vorkommende aromatische Carbonsäuren mit mindestens einer phenolischen Hydroxylgruppe oder Ester derselben, beispielsweise Gerbstoffe, Tannin, Gallussäure und deren Ester, in entsprechenden rostumwandelnden und vor dem Weiterrosten schützenden Zusammensetzungen als rostumwandelnde Komponente eingesetzt werden können. Die Hauptkomponente von Rost ist Eisen-III-Hydroxid, bezw. eine Mischung aus Eisen-III-Hydroxiden und Eisen-III-Oxiden. Das Eisen-III-Hydroxid reagiert mit den genannten, mindestens eine phenolische Hydroxidgruppe aufweisenden Carbonsäuren und deren Estern unter Bildung eines blau oder schwarz gefärbten Eisenkomplexes. Es sei in diesem Zusammenhange beispielsweise auf die USA-Patentschrift Nr. 4, 086, 182 verwiesen.

Die in der genannten USA-Patentschrift beschriebenen rostumwandelnden Mittel enthalten ferner emulgiert oder dispergiert in einem wässrigen Medium ein synthetisches Bindemittel, wie zum Beispiel ein Harz auf Basis von Akrylaten oder Akrylatcopolymerisaten, Polyvinylchlorid, Polyvinylacetat und ähnlichem. Die mit diesen bisher bekannten Zusammensetzungen aufgebrachten Schutzschichten wiesen ferner keine ausreichende Lösungsmittelbeständigkeit auf und wenn derartige Schichten mit weiteren Spezialanstrichen überschichtet werden sollten, war die Ueberstreichbarkeit schlecht und Produkte, wie Chlorkautschuklack, Zweikomponentenlacke und ähnliche, wiesen auf den aufgebrachten Schutzschichten nur eine schlechte Haftung auf.

Ein weiterer Nachteil dieser bekannten Rostschutzmittel auf Basis von Emulsionen oder Dispersionen in einem wässrigen Medium bestand darin, dass sie durch Aufstreichen aufgebracht werden mussten, weil eine Aufbringung mit Hilfe einer Spraydose druch Schaumbildung nicht möglich war.

In der deutschen Auslegeschrift 2 425 213 von L. Peier sind saure Rostumwandlungs- und Rostschutzmittel in Form von wässrigen Dispersionen, Emulsionen oder Lösungen beschrieben, die zusätzlich zu den bekannten Rostumwandlern auf Basis von aromatischen Carbonsäuren mit mindestens einer Hydroxylgruppe, wie Tannin und Gallussäure, noch ein Kunststoffbindemittel enthalten. Die dort genannten Kunststoffbindemittel weisen entweder keine ionischen Gruppen auf, wie die dort erwähnten Polyvinylacetat-Copolymeren, Styrol-Butadienkautschuke oder Styrol-Butadien-Acrylnitrilkautschuke, oder sie weisen als hydrophile Gruppen Hydroxygruppen oder anionische Gruppen, wie Carboxylatgruppen, auf. Als Beispiele für derartige Kunststoffbindemittel sind dort Phenoplaste, nämlich Phenol-Formaldehyd-Kondensationsprodukte, Alkydharze, nämlich Polyesterharze, die durch Kondensation von mehrwertigen Alkoholen mit mehrbasischen Säuren erhalten werden, sowie Epoxdharze genannt, also vernetzte Polyätherharze, die freie Hydroxylgruppen und an den Kettenenden unumgesetzte Epoxdgruppen aufweisen.

In den Beispielen dieser Auslegeschrift werden wasserlösliche Alkydharze, beispielsweise mit einem Fettsäureanteil von 45 %, und unpolare Harze auf Basis von Styrol und Butadien, vorzugsweise Mischungen aus diesen beiden, verwendet.

Die in den Beispielen 1-7 dieser Auslegeschrift beschriebenen Mittel enthalten wasserunmischbare Lösungsmittel, wie Xylol oder Lackbenzin, zusammen mit unpolaren Harzen, Wasser und dem wassermischbaren Lösungsmittel Isopropanol. Sie stellen keine Lösungen dar, sondern Mittel mit einer wässrigen und einer organischen Phase. Auch im Beispiel 8, wo ein Lösungsmittelgemisch aus Wasser und einem etwas geringeren Anteil an Methylisobutylketon eingesetzt wird, besteht die Zusammensetzung aufgrund der geringen Wasserlöslichkeit des Methylisobutylketones (weniger als 2,0 %) aus einer organischen und einer wässrigen Phase.

Obwohl also im Oberbegriff des Anspruches 1 dieser deutschen Auslegeschrift auch Lösungen von Kunststoffbindemitteln genannt sind, ist den Anmeldungsunterlagen kein Hinweis auf einphasige wässrige Lösungen zu entnehmen. Falls die dort genannten Kunststoffbindemittel hydrophile Gruppen aufweisen, sind diese keine kationischen Gruppen, sondern Hydroxylgruppen oder anionische Gruppen, wie Carboxylatgruppen.

EP 0 199 346 B1

## Zusammenfassung der Erfindung

Ziel der vorliegenden Erfindung war es, neue rostumwandelnde und vor dem Weiterrosten schützende filmbildende Zusammensetzungen zu entwickeln, die einen pH-Wert von 3-5 aufweisen und in denen die rostumwandelnde Komponente einer der üblicherweise verwendeten Rostumwandler auf Basis aromatischer Carbonsäuren mit mindestens einer phenolischen Hydroxylgruppe ist. Diese rostumwandelnden Zusammensetzungen sollen auf Eisen oder Eisenlegierungen enthaltenden Substraten eine gut haftende und gleichmässige Schicht ergeben, die eine ausreichende Lösungsmittelbeständigkeit aufweist, damit, falls erwünscht, noch weitere Lackschichten darüber aufgetragen werden können und diese dann eine gute Haftung auf der Schicht der rostumwandelnden Zusammensetzung aufweisen. Ferner sollte mit den rostumwandelnden Zusammensetzungen eine vollständige Umwandlung des Rostes stattfinden und es sollte möglich sein, diese Zusammensetzugen so zu formulieren, dass sie aus einer Spraydose aufgebracht werden können.

Ueberraschenderweise zeigte es sich, dass die angestrebten Ziele dadurch erreicht werden können, indem man die Zusammensetzung zu einer wässrigen Lösung formuliert, in der der Rostumwandler und ein filmbildendes kationisches Kunstharz, gelöst in einem sauren Lösungsmittel auf Basis von Wasser, wassermischbarem organischen Lösungsmittel und mindestens einem zwei- oder mehrwertigem Alkohol vorliegt.

## Beschreibung der Erfindung

Ein Gegenstand der vorliegenden Erfindung ist daher eine rostumwandelnde und vor dem Weiterrosten schützende filmbildende Zusammensetzung, die einen pH-Wert von 3-5 aufweist und als Rostumwandler eine aromatische Carbonsäure mit mindestens einer Hydroxylgruppe enthält, wobei diese Zusammensetzung dadurch gekennzeichnet ist, dass sie eine Lösung ist, die als weitere Komponente ein filmbildendes kationisches Kunstharz, gelöst in einem Lösungsmittel, enthält, das Wasser, mindestens wassermischbare organische Lösungsmittel, sowie mindestens einen zwei- oder mehrwertigen Alkohol als hygroskopischen Zusatz enthält.

Durch die kationischen Gruppen des Kunstharzes, beispielsweise eines Epoxyd-aminadduktharzes, wird gewährleistet, dass dieses Kunstharz in dem sauren pH-Bereich von 3-5 eine ausreichend hohe Löslichkeit in dem wässrigen Lösungsmittelsystem aufweist, sodass die Zusammensetzungen in Form von Lösungen eingesetzt werden können. Dadurch erübrigt sich die Verwendung von irgendwelchen Dispergiermitteln, welche zu unerwünschten Schaumbildungen bei der Auftragung bisher bekannter Rostumwandlerzusammensetzungen aus Sprühdosen führten. Auch wird durch die Vermeidung von nicht wassermischbaren organischen Lösungsmitteln, die bei bisher bekannten rostumwandelnden Zusammensetzungen zur Lösung der filmbildenden Harzkomponenten eingesetzt wurden, nicht nur eine Umweltbelastung durch derartige Lösungsmittel beseitigt, sondern es wird gleichzeitig die Lagerbeständigkeit der Produkte erhöht und es werden auch die Nachteile vermieden, die bei der Auftragung bisher bekannter rostumwandelnder Zusammensetzungen auftraten, die sowohl eine organische Phase als auch eine wässrige Phase enthielten.

Der in den erfindungsgemässen Zusammensetzungen enthaltene zwei- oder mehrwertige Alkohol dient als hygroskopischer Zusatz. Als Beispiele für in diesen Zusammensetzungen enthaltene zwei- oder mehrwertige Alkohole seien Aethylenglykol, Propylenglykol, Butylglykol, Gylcerin oder Mischungen aus zwei- oder mehr derartigen Alkoholen genannt.

In den erfindungsgemässen rostumwandelnden filmbildenden Zusammensetzungen ist das filmbildende kationische Kunstharz in dem Lösungsmittelsystem auf Basis von Wasser und wassermischbaren organischen Lösungsmitteln gelöst. Die bisher bekannten Rostumwandler enthielten die filmbildende Kunstharzkomponente dispergiert in dem Lösungsmittelsystem. Dabei ergaben sich die folgenden Nachteile. Es war eine Aufbringung der Zusammensetzungen aus einer Sprühdose nicht möglich, weil sich dabei Schäume bildeten und durch die Schaumblasen eine gleichmässige Auftragung und ein guter Kontakt eine gleichmässige Auftragung und ein guter Kontakt zwischen der aufgebrachten Schutzschicht und dem behandelten Substrat verunmöglicht wurde. Bei den bis jetzt bekannten Zusammensetzungen war auch die Lagerbeständigkeit ungenügend.

Die in den erfindungsgemässen rostumwandelnden Zusammensetzungen enthaltenen hygroskopischen Zusätze gewährleisten, dass nach der Auftragung der Zusammensetzung eine langsame Trocknung stattfindet und damit eine vollständige Umwandlung von Rostteilchen in den Eisenkomplex mit der mindestens eine phenolische Hydroxylgruppe aufweisende aromatische Carbonsäure erfolgt. Bei der langsamen Abtrocknung findet ferner während der Filmbildung keine Wasserabsonderung statt, so dass ein gleichmässiger, zusammenhängender Schutzfilm gebildet wird.

Bevorzugte kationische Kunstharze, die in den erfindungsgemässen Zusammensetzungen eingesetzt werden, sind kationische Epoxid-aminadduktharze.

Wenn die erfindungsgemässen Zusammensetzungen so formuliert sind, dass sie aus einer Sprühdose aufgebracht werden können, dann tritt bei der Auftragung keinerlei Schaumbildung auf. Aufgrund der Tatsache, dass die Zusammensetzung nur gelöste Komponenten und keine dispergierten Komponenten

3

enthält, besitzen die fraglichen Formulierungen, beispielsweise in Spraydosen abgepackte Formulierungen, eine gute Lagerbeständigkeit.

Im allgemeinen ist es vorteilhaft, wenn die erfindungsgemässen Zusammensetzungen noch als weitere Komponente einen Weichmacher für das kationische Kunstharz enthalten. Die Zugabe von derartigen Weichmachern kann insbesondere bei solchen Zusammensetzungen von Vorteil sein, die aus einer Sprühdose aufgetragen werden sollen. Als Weichmacher sind beispielsweise Chlorparaffin-Urethanharze verwendbar. Im allgemeinen wird der Weichmacher in einer Menge von 10 bis 20 Gew.-%, bezogen auf das Gewicht des in der Zusammensetzung anwesenden filmbildenden kationischen Kunstharzes eingesetzt.

Wie bereits erwähnt wurde, müssen die erfindungsgemässen Zusammensetzungen einen pH-Wert im Bereich von 3 bis 5, beispielsweise einen pH-Wert von etwa 4 bis 5, aufweisen, damit eine ausreichende Löslichkeit des kationischen Kunstharzes in dem angewandten Lösungsmittelsystem auf Basis von Wasser und wassermischbaren organischen Lösungsmitteln gewährleistet ist. Im allgemeinen ist es vorteilhaft, zur Einstellung des pH-Wertes eine Säure zuzusetzen. Speziell vorteilhaft ist es, zu diesem Zweck eine organische Carbonsäure zuzusetzen, wobei Ameisensäure speziell bevorzugt ist, weil durch ihre Anwesenheit die Komplexierungsreaktion zwischen der aromatischen, mindestens eine phenolische Hydroxylgruppe aufweisenden Carbonsäure und dem Rost initiiert, bzw. beschleunigt wird.

Als wassermischbares organisches Lösungsmittel werden in den erfindungsgemässen Zusammensetzungen vorzugsweise niedere Alkohole oder niedere Ketone verwendet, wie zum Beispiel Methanol, Aethanol, Propanol, Aceton oder Methyläthylketon.

Bevorzugte erfindungsgemässe rostumwandelnde Zusammensetzungen sind durch Sprühen auftragbare Zusammensetzungen. Diese sind vorzugsweise in einer korrosionsbeständigen Sprühdose abgepackt, welche als weitere Komponente ein Treibmittel enthält. Aus Gründen der Sicherheit und der Vermeidung einer Umweltbelastung ist als Treibmittel Kohlendioxid bevorzugt.

Eine bevorzugte derartige erfindungsgemässe, in einer Sprühdose abgepackte Zusammensetzung, weist einen pH-Wert im Bereich von 4,0-5,0 auf und sie enthält die folgenden Komponenten, in den angegebenen Mengen, die jeweils auf das Gesamtgewicht der Zusammensetzung bezogen sind :

12 - 16.7 Gew.-% kationisches Epoxyd-aminadduktharz,
55 - 62 Gew.-% Aceton,
10 - 13 Gew.-% Wasser,
5,0 -5,6 Gew.-% Butylglykol,
1,4 - 2,0 Gew.-% Chlorparaffin-Urethanharz,
2,1 - 3,0 Gew.-% Aethylenglykol,
1,4 - 2,0 Gew.-% Ameisensäure,
0,8 - 1,0 Gew.-% Tannin oder Gallussäure und
2,9 - 3,7 Gew.-% Kohlendioxid.

Gemäss einer weiteren Ausführungsart der Erfindung sind die erfindungsgemässen rostumwandelnden Zusammensetzungen solche, welche auf das Eisen oder Eisenlegierungen enthaltende Substrat durch Eintauchen oder Aufstreichen aufgebracht werden.

Eine bevorzugte derartige durch Eintauchen oder Aufstreichen auftragbare erfindungsgemässe Zusammensetzung enthält die folgenden Komponenten, in den angegebenen Mengen, jeweils bezogen auf das Gesamtgewicht der Zusammensetzung :

28 - 32 Gew.-% kationisches Epoxyd-aminadduktharz,
11 - 13 Gew.-% Aceton,
9 - 11 Gew.-% Aethanol,
33 - 35,5 Gew.-% Wasser,
5 - 7 Gew.-% Aethylenglykol,
6 - 7 Gew.-% Ameisensäure und
0,8 - 1,6 Gew.-% Tannin oder Gallussäure.

Ein weiterer Gegenstand der vorliegenden Erfindung ist ein Verfahren zur Behandlung von Eisen oder Eisenlegierungen enthaltenden Substraten, das dadurch gekennzeichnet ist, dass man eine erfindungsgemässe Zusammensetzung auf diese Substrate aufträgt, wobei die aromatische Carbonsäure, die mindestens eine phenolische Hydroxylgruppe aufweist, mit den allenfalls auf dem Substrat vorhandenen Rostpartikeln einen schwarz gefärbten Eisenkomplex bildet und wobei nach dem Trocknen der Schicht der aufgebrachten Zusammensetzung eine zusammenhängende Schutzschicht vorliegt, die eine gute Lösungsmittelbeständigkeit aufweist und gute Haftungseigenschaften gegenüber gegebenenfalls darauf aufgebrachten weiteren Anstrichschichten besitzt.

Gemäss einer bevorzugten Ausführungsart dieses Verfahrens wird eine erfindungsgemässe Zusammensetzung, die als weitere Komponente ein Treibmittel enthält, durch Aufsprühen aus einer korrosionsbeständigen Sprühdose in Form einer gleichmässigen Schicht auf das Substrat aufgebracht.

Vor der Aufbringung der erfindungsgemässen rostumwandelnden und vor dem Weiterrosten schützenden filmbildenden Zusammensetzung soll von dem Eisen oder eine Eisenlegierung enthaltenden Substrat Fett, Schmutz und loser Rost entfernt werden. Beispielsweise kann man stark verrostete Stellen vor der Auftragung abbürsten und auch unterrostete Farbschichten, beispielsweise bei einer Autokaros-

serie, sollen vor der Auftragung der erfindungsgemässen rostumwandelnden Zusammensetzungen entfernt werden.

Nach der Auftragung der erfindungsgemässen rostumwandelnden Zusammensetzungen verwandelt sich der Rost in eine schwarze Korrosionsschutzschicht, durch die ferner auch ein Weiterrosten des Substrates verhindert werden soll.

Wenn über die erfindungsgemässe filmbildende Zusammensetzung keine weitere Schicht an Farben, Lack oder ähnlichem aufgetragen werden soll, sondern die Schicht aus der filmbildenden Zusammensetzung den Endanstrich des Substrates darstellen soll, dann ist es im allgemeinen zweckmässig, etwa 10 bis 14 Stunden nach der Aufbringung der ersten Schicht aus der rostumwandelnden, filmbildenden Zusammensetzung eine zweite Schicht aus der rostumwandelnden filmbildenden Zusammensetzung aufzutragen.

Ein spezieller Vortiel der auf das Substrat aufgetragenen Schichten aus den erfindungsgemässen rostumwandelnden Zusammensetzungen besteht jedoch darin, dass diese nicht nur auf dem Eisen oder eine Eisenlegierung enthaltenden Substrat eine hervorragende Haftfestigkeit besitzen, sondern dass auf diese Schicht aus der rostumwandelnden Zusammensetzung noch weitere Beschichtungen aufgetragen werden können, beispielsweise aus Kunstharz, Lacken, Oelfarben oder ähnlichen derartigen Materialien und dass dann diese weiteren Schichten auf der Schicht aus der rostumwandelnden Zusammensetzung eine hervorragend gute Haftung aufweisen.

Die Erfindung sei nun anhand von Beispielen näher erläutert.

## Beispiel 1

In diesem Beispiel wird eine in einer korrosionsbeständigen Sprühdose abgepackte rostumwandelnde und vor dem Weiterrosten schützende filmbildende Zusamensetzung beschrieben, die durch Aufsprühen auf das Eisen oder eine Eisenlegierung enthaltendes Substrat aufgebracht werden kann.

Die Zusammensetzung enthielt die folgenden Komponenten in den angegebenen Mengen, jeweils bezogen auf das Gesamtgewicht der Zusammensetzung :

16,7 Gew.-% kationisches Epoxyd-aminaddukt,
59 Gew.-% Aceton,
11,8 Gew.-% Wasser,
5,3 Gew.-% Butylglykol, bzw. Aethylenglycol-mono-n-butyläther der Formel $HO-CH_2-CH_2-O-C_4H_9$,
1,7 Gew.-% Chlorparaffin-Urethanharz,
2,6 Gew.-% Aethylenglykol,
1,7 Gew.-% Ameisensäure,
0,9 Gew.-% Tannin oder Gallussäure und ferner
3,3 Gew.-% Kohlendioxid.
Der pH-Wert dieser Zusammensetzung betrug etwa 4,5.

## Beispiel 2

In diesem Beispiel wird eine rostumwandelnde und vor dem Weiterrosten schützende filmbildende Zusammensetzung beschrieben, die durch Eintauchen oder Aufstreichen auf das Eisen oder eine Eisenlegierung enthaltendes Substrat aufgebracht werden kann. Diese Zusammensetzung enthielt die folgenden Komponenten in den angegebenen Mengen, jeweils bezogen auf das Gesamtgewicht der Zusammensetzung :

30,0 Gew.-% kationisches Epoxyd-aminaddukt,
34,2 Gew.-% Wasser,
12,0 Gew.-% Aceton,
10,0 Gew.-% Aethanol,
6,0 Gew.-% Aethylenglykol,
6,6 Gew.-% Ameisensäure,
1,2 Gew.-% Tannin oder Gallussäure.
Der pH-Wert dieser Zusammensetzung lag im Bereich von 4 - 4,5.

## Beispiel 3

Die Zusammensetzung enthielt die gleichen Komponente in den im Beispiel 1 angegebenen Mengen, mit Ausnahme dessen, dass sie kein Butylglykol enthielt und statt dessen insgesamt 8,9 Gew.-%, bezogen auf das Gesamtgewicht der Zusammensetzung, an Aethylenglycol enthielt.

Die Zusammensetzung wies einen pH-Wert von etwa 4,5 auf und sie wurde wiederum zusammen mit 4,0 Gew.-% Kohlendioxid, bezogen auf das Gesamtgewicht der Zusammensetzung, in einer korrosionsbeständigen Sprühdose abgepackt.

## Patentansprüche

1. Rostumwandelnde und vor dem Weiterrosten schützende filmbridende Zusammensetzung, die einen pH-Wert von 3 - 5 aufweist und als Rostumwandler einer aromatische Carbonsäure mit mindestens einer phenolischen Hydroxylgruppe enthält, dadurch gekennzeichnet, dass die Zusammensetzung eine Lösung ist, die als weitere Komponente ein filmbildendes kationisches Kunstharz, gelöst in einem Lösungsmittel enthält, das Wasser, wassermischbare organische Lösungsmittel, sowie mindestens einen zwei-oder mehrwertigen Alkohol als hygroskopischen Zusatz enthält.

2. Zusammensetzung nach Anspruch 1, dadurch gekennzeichnet, dass sie als hygroskopischen Zusatz Aethylenglykol, Propylenglykol, Butyl-glykol, Glycerin oder Mischungen aus zwei- oder mehr derartigen Alkoholen enthält.

3. Zusammensetzung nach Anspruch 1 oder 2, dadurch gekennzeichnet, dass sie als in dem Lösungsmittelsystem gelöstes kationisches Kunstharz ein Epoxyaminadduktharz enthält.

4. Zusammensetzung nach einem der Ansprüche 1 bis 3, dadurch gekennzeichnet, dass sie eine organische Säure, vorzugsweise Ameisensäure, zur Einstellung des pH-Wertes der Zusammensetzung auf einen Wert von 3 bis 5, vorzugsweise 4 bis 5, enthält.

5. Zusammensetzung nach einem der Ansprüche 1 bis 4, dadurch gekennzeichnet, dass sie als wassermischbares organisches Lösungsmittel einen niederen Alkohol oder ein niederes Keton enthält, vorzugsweise Methanol, Aethanol, Propanol, Aceton oder Methyläthylketon.

6. Zusammensetzung nach einem der Ansprüche 1 bis 5, dadurch gekennzeichnet, dass sie als weitere Komponente einen Weichmacher für das kationische Kunstharz, vorzugsweise ein Chlorparaffin-Urethanharz enthält.

7. Zusammensetzung gemäss einem der Patentansprüche 1 bis 6, dadurch gekennzeichnet, dass sie durch Eintauchen oder Aufstreichen auftragbar ist und die folgenden Komponenten in den angegebenen Mengen, jeweils bezogen auf das Gesamtgewicht der Zusammensetzung, enthält :

28 - 32 Gew.-% kationisches Epoxyd-aminadduktharz,
11 - 13 Gew.-% Aceton,
9 - 11 Gew.-% Aethanol,
33 - 33,5 Gew.-% Wasser,
5 - 7 Gew.-% Aethylenglykol,
6 - 7 Gew.-% Ameisensäure und
0,8 - 1,6 Gew.-% Tannin oder Gallussäure.

8. Zusammensetzung nach einem der Ansprüche 1 bis 6, dadurch gekennzeichnet, dass sie in einer korrosionsbeständigen Sprühdose abgepackt ist und als weitere Komponente ein Treibmittel, vorzugsweise Kohlendioxid, enthält.

9. Zusammensetzung nach Anspruch 8, dadurch gekennzeichnet, dass sie einen pH-Wert von 4,0 bis 5,0 vorzugsweise 4,4 bis 4,6 aufweist und die folgenden Komponenten in den angegebenen Mengen, jeweils bezogen auf das Gesamtgewicht der Zusammensetzung, enthält :

12 - 16,7 Gew.-% kationisches Epoxyd-aminaddukt,
55 - 62 Gew.-% Aceton,
10 - 13 Gew.-% Wasser,
5,0 - 5,6 Gew.-% Butylglykol,
1,4 - 2,0 Gew.-% Chlorparaffin-Urethanharz,
2,1 - 3,0 Gew.-% Aethylenglykol,
1,4 - 2,0 Gew.-% Ameisensäure und
0,8 - 1,0 Gew.-% Tannin oder Gallussäure, sowie zusätzlich
2,9 - 3,7 Gew.-% Kohlendioxid.

10. Zusammensetzung nach Anspruch 9, dadurch gekennzeichnet, dass sie die folgenden Komponenten enthält :

16,7 Gew.-% kationisches Epoxyd-aminaddukt,
59 Gew.-% Aceton,
11,8 Gew.-% Wasser,
5,3 Gew.-% Butylglykol,
1,7 Gew.-% Chlorparaffin-Urethanharz,
2,6 Gew.-% Aethylenglykol,
1,7 Gew.-% Ameisensäure
0,9 Gew.-% Tannin oder Gallussäure, sowie zusätzlich
3,3 Gew.-% Kohlendioxid.

11. Verfahren zur Behandlung von Eisen oder Eisenlegierungen enthaltenden Substraten, dadurch gekennzeichnet, dass man eine Zusammensetzung gemäss Anspruch 1 auf diese Substrate aufträgt, wobei die aromatische Carbonsäure, die mindestens eine phenolische Hydroxylgruppe aufweist, mit den allenfalls auf dem Substrat vorhandenen Rostpartikeln einen schwarz gefärbten Eisenkomplex bildet und wobei nach dem Trocknen der Schicht der aufgebrachten Zusammensetzung eine zusammenhängende Schutzschicht vorliegt, die eine gute Lösungsmittelbeständigkeit aufweist und gute Haftungseigenschaften gegenüber gegebenenfalls darauf aufgebrachten weiteren Anstrichschichten besitzt.

12. Verfahren nach Anspruch 11, dadurch gekennzeichnet, dass man eine Zusammensetzung gemäss Anspruch 8 durch Aufsprühen aus einer korrosionsbeständigen Sprühdose in Form einer gleichmässigen Schicht auf das Substrat aufbringt.

## Claims

1. Rust-transforming and rust-preventing filmforming composition which has a pH value of 3 - 5 and contains as rust-transformer an aromatic carboxylic acid with at least one phenolic hydroxy group characterized in that the composition is a solution which contains as further component a film forming cationic synthetic resin dissolved in a solvent system containing water, water miscible organic solvents and at least one dihydric or polyhydric alcohol as hydroscopic additive.

2. Composition according to claim 1 characterized in that it contains as hydroscopic additive ethylene-glycol, propylene-glycol, butylglycol, glycerol or a mixture of two or more such dihydric or polyhydric alcohols.

3. Composition according to claim 1 or 2, characterized in that it contains as cationic synthetic resin which is dissolved in the solvent system an epoxy-amine-addition resin.

4. Composition according to one of the claims 1 - 3, characterized in that it contains an organic acid, preferably formic acid, for adjusting the pH value of the composition to a value of 3 - 5, preferably 4 - 5.

5. Composition according to one of the claims 1 - 4, characterized in that it contains as water miscible organic solvent a lower alcohol or a lower ketone, preferably methanol, ethanol, propanol, acetone or methyl-ethylketone.

6. Composition according to one of the claims 1 - 5, characterized in that it contains as further component a plasticizer for the film forming cationic synthetic resin, preferably a synthetic chloroparaffine-urethane resin.

7. Composition according to one of the claims 1 - 6, characterized in that it is applicable by dipping in or painting onto and that it contains the following components in the stated quantities, each referred to the total weight of the composition :

28 - 32 % by weight of epoxy-amine-addition resin,
11 - 13 % by weight acetone,
9 - 11 % by weight ethanol,
33 - 35,5 % by weight water,
5 - 7 % by weight ethylene-glycol,
6 - 7 % by weight formic acid and
0,8 - 1,6 % by weight tannin or gallic acid.

8. Composition according to one of the claims 1 - 6, characterized in that it is packed in a corrosion resistant container equipped with a spraying nozzle and that it contains as further component a propellant, preferably carbon dioxide.

9. Composition according to claim 8, characterized in that it has a pH value of 4,0 - 5, preferably 4,4 - 4,6 and that it contains the following components in the stated amounts, each referred to the total weight of the composition :

12 - 16,7 % by weight cationic epoxy-amine-addition resin,
55 - 62 % by weight acetone,
10 - 13 % by weight water,
5,0 - 5,6 % by weight butyl-glycol,
1,4 - 2,0 % by weight chloro-paraffine-urethane resin,
2,1 - 3,0 % by weight ethylene-glycol,
1,4 - 2,0 % by weight formic acid and
0,8 - 1,0 % by weight tannin or gallic acid as well as furthermore
2,0 - 3,7 % by weight carbon dioxide.

10. Composition according to claim 9, characterized in that it contains the following components :

16,7 % by weight cationic epoxy-amine-addition resin,
59 % by weight acetone,
11,8 % by weight water,
5,3 % by weight butyl-glycol,
1,7 % by weight chloro-paraffine-urethane resin,
2,6 % by weight ethylene-glycol,
1,7 % by weight formic acid,
0,9 % by weight tannin or gallic acid as well as furthermore
3,3 % by weight carbon-dioxide.

11. Process for treating substrates containing iron or iron alloys, characterized in that a composition according to claim 1 is applied to said substrate and that thereby the aromatic carboxylic acid which comprises at least one phenolic hydroxy group forms with rust particles which are optionally present on the substrate a black colored iron complex and wherein after the drying of the layer of the applied composition a coherent protective layer is present which has a good solvent stability and good adhesive properties for further coatings which are optionally applied to it.

12. Process according to claim 11, characterized in that a composition according to claim 8 is applied to the substrate by spraying from a corrosion resistant spray container in the form of a uniform layer.

**Revendications**

1. Composition stabilisatrice de rouille et de protection contre la poursuite de la rouille, qui possède une valeur de pH de 3 à 5 et contient, à titre de stabilisateur de rouille, un acide carboxylique aromatique qui contient au moins un radical hydroxyle phénolique, caractérisée en ce que la composition est une solution qui contient, à titre de composant supplémentaire, une résine cationique filmogène, dissoute dans un solvant, qui contient de l'eau, un solvant organique miscible à l'eau, comme aussi au moins un alcool bi- ou polyhydroxylé, à titre d'additif hygroscopique.

2. Composition suivant la revendication 1, caractérisée en ce qu'elle contient, à titre d'additif hygroscopique, de l'éthylène-glycol, du propylène-glycol, du butyl-glycol, de la glycérine, ou des mélanges de deux ou de plus de deux alcools de ce genre.

3. Composition suivant la revendication 1 ou la revendication 2, caractérisée en ce qu'elle contient une résine d'adduct d'époxyde-amine à titre de résine synthétique cationique dissoute dans le système solvant.

4. Composition suivant l'une des revendications 1 à 3, caractérisée en ce qu'elle contient un acide organique, de préférence l'acide formique, pour le réglage de la valeur du pH de la composition à 3 - 5, de préférence 4 - 5.

5. Composition suivant l'une des revendications 1 à 4, caractérisée en ce qu'elle contient, à titre de solvant organique miscible à l'eau, un alcool inférieur ou une cétone inférieure, de préférence le méthanol, l'éthanol, le propanol, l'acétone ou la méthyléthylcétone.

6. Composition suivant l'une des revendications 1 à 5, caractérisée en ce qu'elle contient, à titre de composant supplémentaire, un plastifiant pour la résine synthétique cationique, de préférence une résine d'uréthanne-chloroparaffine.

7. Composition suivant l'une des revendications 1 à 6, caractérisée en ce qu'elle est applicable par immersion ou par étalement et en ce qu'elle contient les composants qui suivent, en les proportions indiquées, chacune de ces proportions se rapportant au poids global de la composition :
28 -32 % en poids de résine d'adduct d'époxyde-amine,
11 - 13% en poids d'acétone,
9 - 11 % en poids d'éthanol,
33 - 35,5 % en poids d'eau,
5 - 7 % en poids d'éthylène-glycol,
6 - 7 % en poids d'acide formique et
0,8 - 1,6 % en poids de tanin ou d'acide gallique.

8. Composition suivant l'une des revendications 1 à 6, caractérisée en ce qu'elle est enfermée dans une boîte de pulvérisation résistant à la corrosion et en ce qu'elle contient un agent porogène, de préférence l'anhydride carbonique, à titre de composant supplémentaire.

9. Composition suivant la revendication 8, caractérisée en ce qu'elle possède une valeur de pH de 4,0 à 5,0, de préférence de 4,4 à 4,6 et en ce qu'elle contient les composants qui suivent en les proportions indiquées, chacune de ces proportions étant rapportée au poids global de la composition :
12 - 16,7 % en poids d'adduct d'époxyde-amine cationique,
55 - 62 % en poids d'acétone,
10 - 13 % en poids d'eau,
5,0 - 5,6 % en poids de butyl-glycol,
1,4 - 2,0 % en poids de résine d'uréthanne-chloroparaffine,
2,1 - 3,0 % en poids d'éthylène-glycol,
1,4 - 2,0 % en poids d'acide formique, et
0,8 - 1,0 % en poids de tanin ou d'acide gallique, commme aussi complémentairement
2,9 - 3,7 % en poids d'anhydride carbonique.

10. Composition suivant la revendication 9, caractérisée en ce qu'elle contient les composants qui suivent :
16,7 % en poids de résine d'adduct d'époxyde-amine,
59 % en poids d'acétone,
11,8 % en poids d'eau,
5,3 % en poids de butyl-glycol,
1,7 % en poids de résine d'uréthanne-chloroparaffine,
2,6 % en poids d'éthylène-glycol,
1,7 % en poids d'acide formique,
0,9 % en poids de tanin ou d'acide gallique, comme aussi complémentairement
3,3 % en poids d'anhydride carbonique.

8

11. Procédé de traitement de supports ou d'objets contenant du fer ou des alliages du fer, caractérisé en ce que l'on applique sur ces supports ou objets une composition suivant la revendication 1, où l'acide carboxylique aromatique, qui présente au moins un radical hydroxyle phénolique, forme un complexe de fer de teinte noire avec les particules de rouille éventuellement présentes sur l'objet ou le support et où, après le séchage de la couche de composition appliquée, demeure une couche protectrice cohérente qui possède une bonne résistance aux solvants et de bonnes propriétés d'adhérence vis-à-vis de couches de peinture supplémentaires éventuellement appliquées sur cette couche protectrice.

12. Procédé suivant la revendication 11, caractérisé en ce que l'on applique sur l'objet ou le support une composition selon la revendication 8, par pulvérisation à partir d'une boîte de pulvérisation résistant à la corrosion, sous la forme d'une couche uniforme.